**Europäisches Patentamt**

(19) **European Patent Office**

**Office européen des brevets**

(11) Veröffentlichungsnummer: **0 203 057**
**B1**

(12) # EUROPÄISCHE PATENTSCHRIFT

(45) Veröffentlichungstag der Patentschrift:
22.08.90

(51) Int. Cl.⁵: **E02B 15/04**

(21) Anmeldenummer: **86890140.6**

(22) Anmeldetag: **14.05.86**

(54) **Einrichtung zum Abtrennen von auf Flüssigkeiten aufschwimmenden Flüssigkeitsfilmen.**

(30) Priorität: **23.05.85 AT 1564/85**

(43) Veröffentlichungstag der Anmeldung:
**26.11.86 Patentblatt 86/48**

(45) Bekanntmachung des Hinweises auf die Patenterteilung:
**22.08.90 Patentblatt 90/34**

(84) Benannte Vertragsstaaten:
**BE CH DE FR GB IT LI LU NL SE**

(56) Entgegenhaltungen:
**DE-A- 3 307 490**
**FR-A- 1 530 786**
**GB-A- 2 028 157**
**US-A- 3 358 838**

**PRODUCT ENGINEERING, Band 42, Nr. 8, 1. März 1971, Seiten 48,49, New York, US; F.D. YEAPLE: "Engineers here and abroad find ways to fight oil slicks"**

(73) Patentinhaber: **VOEST-ALPINE Aktiengesellschaft, Friedrichstrasse 4, A-1011 Wien(AT)**

(72) Erfinder: **Klinar, Gottfried, Alpenstrasse 33, A-8707 Leoben(AT)**
Erfinder: **Cvitas, Vilim Dipl.-Ing., Voltastrasse 29, A-4040 Linz(AT)**

(74) Vertreter: **Haffner, Thomas M., Dr. et al, Patentanwaltskanzlei Dipl.-Ing. Adolf Kretschmer Dr. Thomas M. Haffner Schottengasse 3a, A-1014 Wien(AT)**

## Beschreibung

Die Erfindung bezieht sich auf eine Einrichtung zum Abtrennen von auf Flüssigkeiten aufschwimmenden Flüssigkeitsfilmen, insbesondere von auf Wasser aufschwimmenden Ölfilmen, mit von einer Rotationsachse durchsetzten, zu rotierender Bewegung antreibbaren und in die Flüssigkeit teilweise eintauchenden Scheiben und oberhalb der Flüssigkeitsoberfläche angeordneten Abstreifern, welche an wenigstens einer Fläche der Scheiben anliegend geführt sind.

Das Abtrennen von auf Wasser aufschwimmenden Ölfilmen in der Stärke von einigen Zehntel Millimetern bis zu mehreren Millimetern ist in der Praxis überaus schwierig. Es wurde bereits vorgeschlagen, mittels Pumpen über Oberflächensauger Ölfilme abzutrennen, wobei allerdings der Nachteil besteht, daß sehr viel Wasser bei der Abtrennung mitgerissen wird. Nach dem Absaugvorgang bleiben noch erhebliche Ölmengen zurück, welche in der Folge mit teuren Ölbindemitteln gebunden werden müssen und zumeist manuell abgeschöpft werden müssen. Ein auf diese Weise geborgenes Öl ist für eine Regeneration bzw. Wiederverwertung zumeist verloren und muß oft unter Anwendung einer Stützfeuerung verbrannt werden.

Eine Einrichtung der eingangs genannten Art ist beispielsweise der US-A 3 358 838 zu entnehmen, wobei an einer gemeinsamen Drehachse scheibenförmige Körper mit teilweise geneigten Seitenflächen gelagert sind. Zum Abstreifen eines an den Scheiben anhaftenden Filmes sind dabei Abstreifer vorgesehen. Ähnliche Einrichtungen mit an einer Drehachse gelagerten Körpern sind beispielsweise der GB-A 2 028 157, der FR-A 1 530 786 sowie der Zeitschrift "Product Engineering", Bd. 42, Nr. 8, 1. März 1971, S. 48, 49 zu entnehmen. Bei der Ausbildung gemäß der GB-A 2 028 157 findet eine zu einer Förderschnecke ähnliche Einrichtung, bei der FR-A 1 530 786 eine Walze mit strukturierter Oberfläche und bei der Ausbildung gemäß der Zeitschrift "Product Engineering" ein walzenförmiger Körper mit in Längsrichtung der Walze verlaufenden, abstehenden Blechen Verwendung. Bei den bekannten Ausbildungen wird zwischen der Einrichtung und der zu reinigenden Flüssigkeit eine Relativbewegung durch eine gerichtete Strömung der Flüssigkeit und/oder eine Bewegung der gesamten Einrichtung aufrechterhalten, um eine Reinigung einer größeren Oberfläche und eine Bewegung von aufschwimmenden Öllinsen zu erzielen.

Die Erfindung zielt nun darauf ab, eine einfache und billige Einrichtung zu schaffen, mit welcher auch relativ dünne Ölfilme sicher abgetrennt werden können: Zur Lösung dieser Aufgabe besteht die erfindungsgemäße Einrichtung im wesentlichen darin, daß jede der Symmetrieachsen der Scheiben mit der die Scheiben durchsetzenden Rotationsachse einen von 90° verschiedenen Winkel zur Rotationsachse einschließt, und daß benachbarte Scheiben in wenigstens einem Axialschnitt abwechselnd entgegengesetzt zur Rotationsachse geneigt angeordnet sind. Dadurch, daß eine Mehrzahl von Scheiben mittels eines Antriebes zur Rotation antreibbar in die flüssige Phase eintaucht, ergibt sich beim Eintauchen der Scheiben zunächst ein oberflächliches Benetzen der Scheiben mit der aufschwimmenden Phase. Im Falle einer Ölphase bildet sich somit nach dem ersten Eintauchen eine dünne Ölschicht an der Oberfläche der Scheiben aus, welche in der Folge auf Grund ihrer hydrophoben Eigenschaften die Tendenz zeigt, weiteres Öl bevorzugt abzutrennen und nur geringe Mengen Wasser mitzureißen. Dadurch, daß die Scheiben geneigt ausgebildet sind und daß benachbarte Scheiben in wenigstens einem Axialschnitt abwechselnd entgegengesetzt zur Rotationsachse geneigt angeordnet sind, wird zwischen benachbarten Scheiben die Oberfläche abwechselnd vergrößert und verkleinert, wobei eine entsprechend kleinere Oberfläche einen dickeren Ölfilm und damit eine erleichterte Aufnahme des Ölfilmes durch die Scheiben ergibt. Durch die Schrägstellung der Scheiben ergibt sich bereits der Vorteil, daß die aufschwimmenden Öllinsen abwechselnd zu beiden Seiten der Scheibe leichter mitgenommen werden als bei senkrecht eintauchenden Scheiben, da die Schrägstellung der Scheiben eine Bewegung der Scheiben zur Folge hat, bei welcher auf die Oberfläche eine in Richtung der Oberfläche verlaufende Kraft bzw. Bewegungskomponente wirksam wird. Die Öllinsen werden somit abwechselnd rechts und links der Scheibe auf die Scheibe aufgeschoben, was gleichfalls den Abtrenneffekt wesentlich begünstigt.

Um eine hinreichende Benetzung der einzelnen Scheiben und damit eine möglichst große Aufnahme bei kleinen Einrichtungen zu gewährleisten, sind vorzugsweise die Scheiben über wenigstens ein Viertel, vorzugsweise die Hälfte, ihres Durchmessers in die flüssige Phase eintauchend gelagert. Die einzelnen Scheiben können hiebei aus einem Material mit glatter Oberfläche, wie beispielsweise Kunststoff, Glas, Edelstahl od. dgl., ausgebildet sein, wobei die Einrichtung bevorzugt mit Drehzahlen von etwa 15 bis 30 $min^{-1}$ betreibbar ist. Durch die sanfte Bewegung der Oberfläche ergibt sich bei dieser Einrichtung der Vorteil, daß auch nicht geschlossene Ölfilme in einer Weise bewegt werden, daß die freischwimmenden Öllinsen zu den Scheiben transportiert und schließlich von den Scheiben mitgenommen werden.

Die Ableitung des Ölfilmes kann durch eine Auffangrinne sichergestellt werden. Die Ausbildung kann hiezu in einfacher Weise so getroffen sein, daß im wesentlichen parallel zur Rotationsachse eine Auffangrinne angeordnet ist und daß die Abstreifer zur Auffangrinne geneigt angeordnet sind und sich bis oberhalb der Auffangrinne erstrecken. In besonders einfacher Weise kann die Auffangrinne von der Antriebswelle für die Scheiben selbst gebildet sein. Zu diesem Zweck ist bevorzugt die Auffangrinne als Hohlwelle ausgebildet, an welcher die Scheiben gelagert sind. Um sicherzustellen, daß bei Ableitung des Ölfilmes über die hohle Welle lediglich Öl, nicht aber Wasser abgefördert wird, weist die Hohlwelle bevorzugt nahe den Scheiben radiale Durchbrechungen auf, wobei ein feststehendes, zur Hohlwelle und den Scheiben abgedichtetes Gehäuse, welches die Durchbrechungen der Hohlwelle übergreift, vorgesehen ist und die Abstreifer an die aus der flüssigen Phase austauchenden Eintrittsöffnungen des Gehäuses münden. Ein derartiges feststehendes Gehäuse bietet darüberhinaus in einfacher Weise die Möglichkeit, die Abstreifer ortsfest zu lagern. Die Abstreifer können in einfacher Weise den Flächen der Scheiben zugewandte Abstreiflippen aufweisen und federnd an die Flächen der Scheiben anpreßbar sein. Wenn der Abstreifvorgang erst nach einer Mehrzahl von Eintauch- und Austauchvorgängen der Scheiben vorgenommen werden soll, kann in einfacher Weise eine Steuerung der Abstreifer derart vorgenommen werden, daß die Abstreifer intermittierend von den Oberflächen der Scheiben abgehoben werden und jeweils nach vorbestimmten Zeitintervallen an die Scheiben angelegt werden.

Die Einrichtung kann in einfacher Weise in rinnenförmigen Halbschalen gelagert sein, wobei die Scheiben so dimensioniert sind, daß sie bei ihrer Rotation nicht an der Innenwand der Halbschalen streifen. Für die Verwendung der Einrichtung zur Abtrennung von Ölfilmen in Hafenbecken oder stehenden Gewässern können mit Vorteil ein Mehrzahl derartiger Einrichtungen miteinander verbunden werden, wofür die Rotationsachse bzw. -welle an ihren freien Enden Kupplungsstücke für den Anschluß eine Antriebsmotors und/oder weiterer Wellen trägt.

Die erfindungsgemäße Einrichtung eignet sich bevorzugt für das Abtrennen von aufschwimmenden Ölfilmen aus Absetzbecken, Pumpensümpfen od. dgl., wie beispielsweise in Fertigungsstraßen der metallverarbeitenden Industrie, wo Schmier- und Kühlöle bzw. Lecköle aus Hydrauliksystemen anfallen. Weiters kann Öl aus Ölfallen bzw. Ölabscheidern in Großgaragen, Werkstätten, Raffinerien und Tanklagern in einfacher Weise abgetrennt werden. Bei der Verwendung in stehenden Gewässern, wie beispielsweise Werft- und Hafenbecken läßt sich gleichfalls in einfacher Weise eine Ölsperre unter Einbeziehung der erfindungsgemäßen Einrichtung zum Abtrennen der Ölfilme verwirklichen.

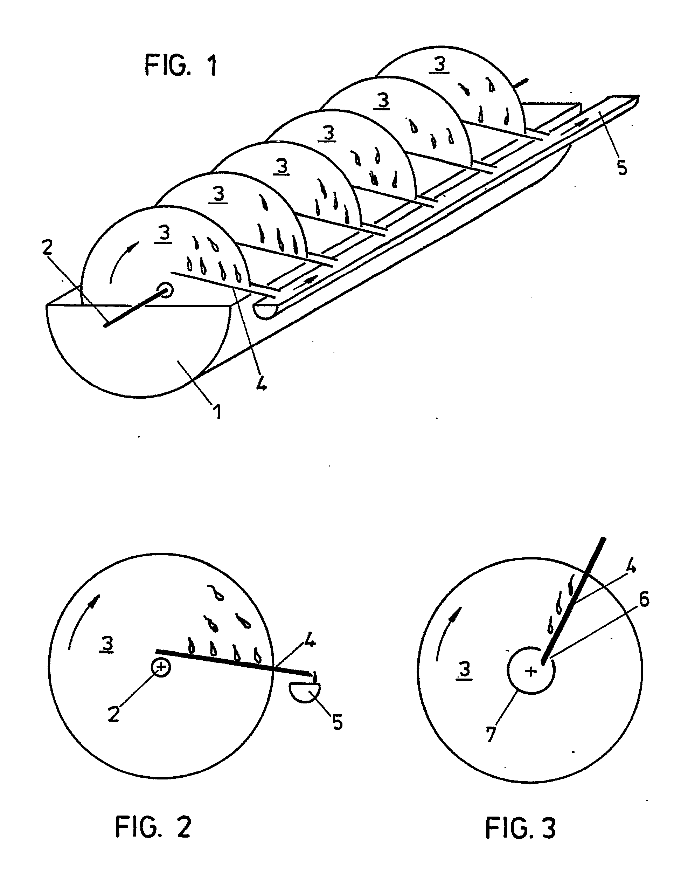

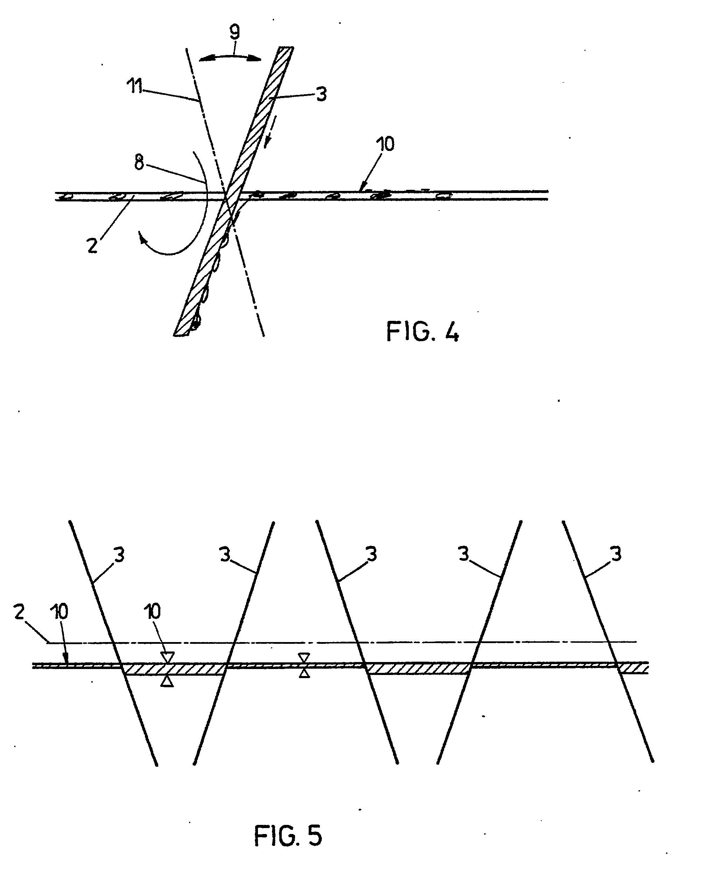

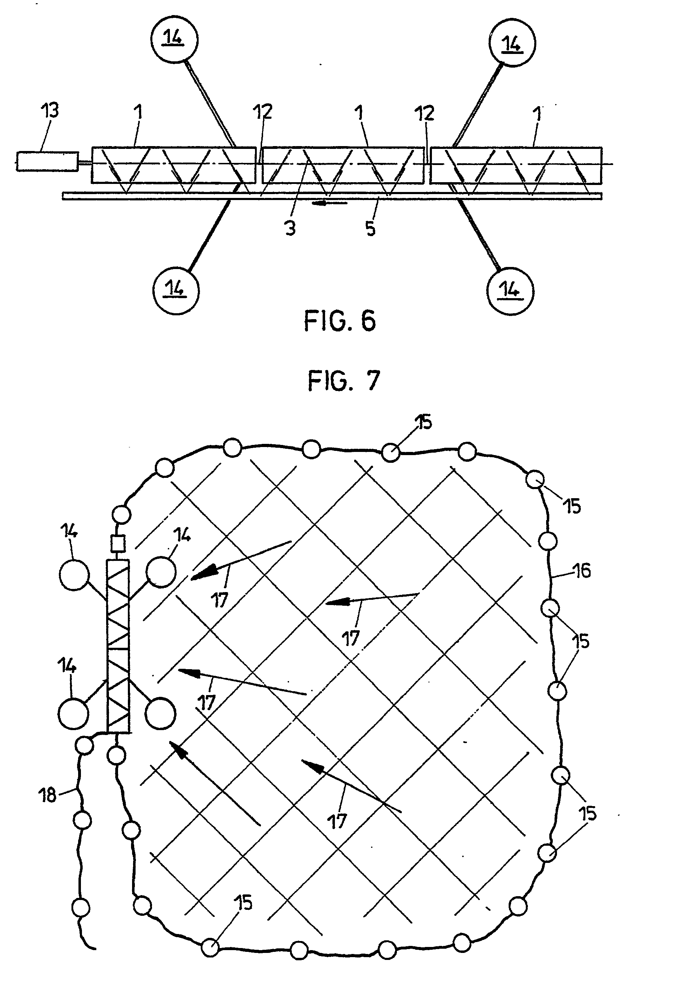

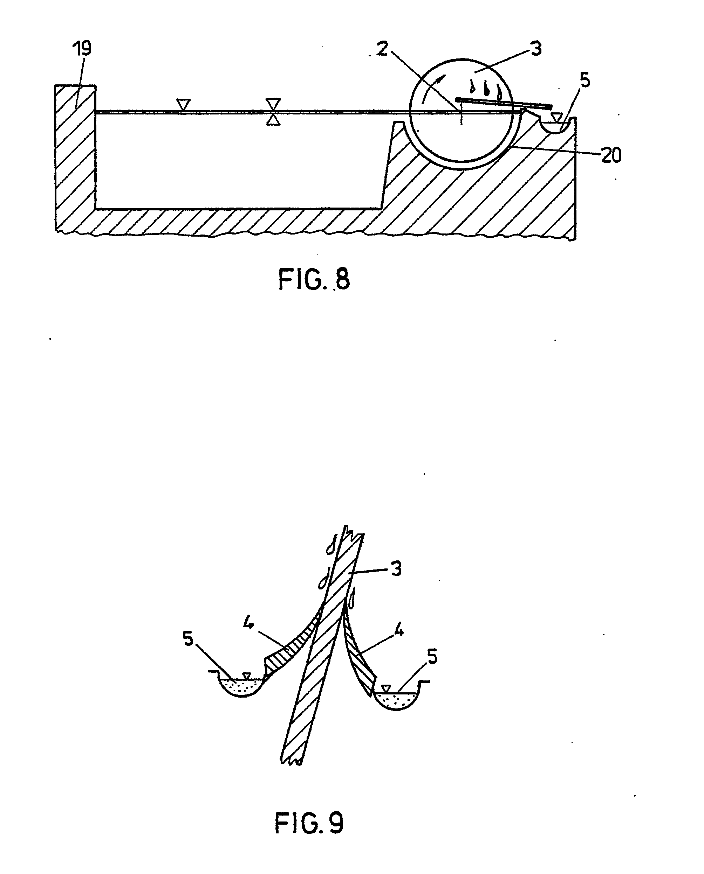

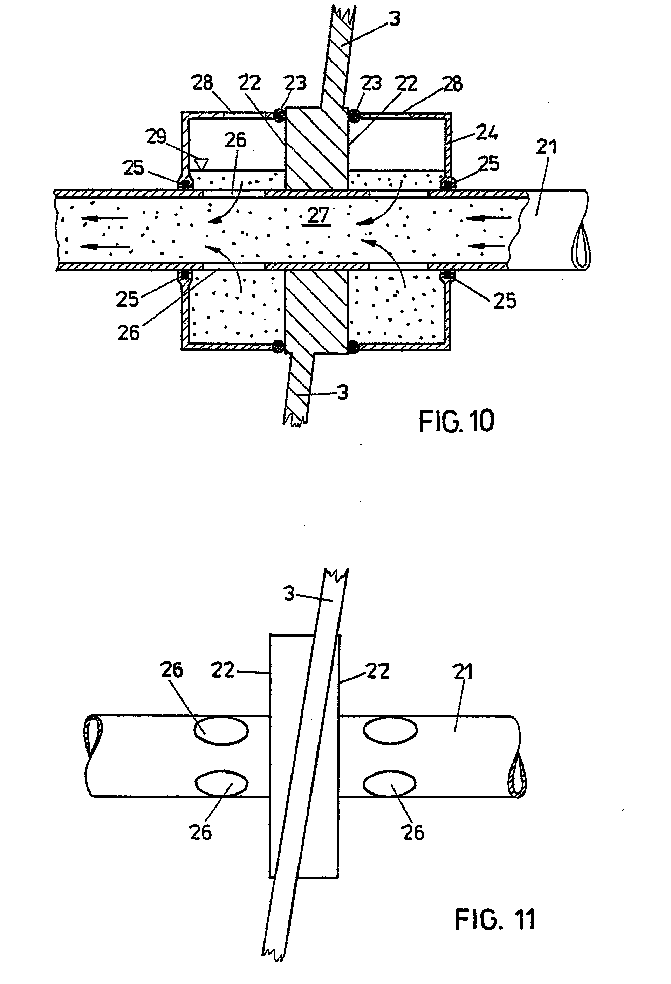

Die Erfindung wird nachfolgend an Hand von in der Zeichnung dargestellten Ausführungsbeispielen näher erläutert. In dieser zeigen Fig.1 eine perspektivische Darstellung einer ersten Ausführungsform einer Einrichtung ohne Antriebsmotor und ohne Darstellung der in wenigstens einem Axialschnitt abwechselnd entgegengesetzt zur Rotationsachse geneigten benachbarten Scheiben (siehe dazu Fig. 5); Fig.2 und 3 verschiedene Anordnungen der Abstreifer in schematischer Darstellung; Fig.4 und 5 eine schematische Darstellung der der Abtrennung zugrunde liegenden Wirkungsmechanismen; Fig.6 eine schematisch dargestellte Verbindung mehrerer Einrichtungen zur Einbeziehung in eine Ölsperre, wie sie schematisch in Fig.7 erläutert ist; Fig.8 eine feste Einbauform für die Verwendung in Verbindung mit Pumpensümpfen, Ölscheidern oder Absetzbecken; Fig.9 eine schematische Darstellung der Abstreifwirkung und der Ableitung des abgestreiften Öls, sowie Fig.10 und 11 eine Ausbildung der Ableitung für das abgetrennte Öl unter Verwendung einer hohlen Antriebswelle für die Scheiben.

In Fig.1 ist ein als Halbschale ausgebildetes Becken 1 ersichtlich, in welchem um eine Achse 2 rotierbar Scheiben 3 gelagert sind. Die Scheiben 3 tauchen über etwas weniger als die Hälfte ihres Durchmessers in die im Becken 1 enthaltene flüssige Phase mit dem aufschwimmenden Film ein. Der von den Oberflächen der Scheiben 3 aufgenommene und transportierte Film wird über Abstreifer 4 einer Ölsammelrinne 5 zugeführt.

In Fig. 2 ist die Anordnung der Abstreifer entsprechend der Darstellung nach Fig. 1 in Achsrichtung gesehen nochmals dargestellt. Der an der Oberfläche der Scheiben 3 anhaftende Ölfilm wird von den Abstreifern 4 zu einer sich im wesentlichen parallel zur Achse 2 erstreckenden Sammelrinne 5 abgefördert.

Bei der Darstellung nach Fig. 3 erfolgt die Ableitung des an der Oberfläche der Scheibe 3 haftenden Ölfilmes über die Abstreifer 4 zu einer radialen Durchbrechung 6 einer als Hohlwelle 7 ausgebildeten Antriebswelle für die Scheiben. Die Ableitung erfolgt somit koaxial zur Antriebswelle.

In Fig. 4 wird veranschaulicht, daß eine Scheibe 3, welche zur Rotationsachse 2 schräggestellt angeordnet ist, bei ihrer Rotation in Richtung des Pfeiles 8 im Sinne des Doppelpfeiles 9 Abwechselnd ihre Neigung zur Oberfläche 10 des Ölfilmes ändert. Die maximale Auslenkung in die Gegenrichtung ist hiebei schematisch durch die strichpunktierte Linie 11 dargestellt. Bei dieser Bewegung gelangt der aufschwimmende Ölfilm abwechselnd unter verschiedenen Winkeln zu beiden Seiten der Scheiben 3 an die Oberfläche der Scheiben, wobei eine geringfügige Scherbeanspruchung auf die Oberfläche ausgeübt wird und kleinste Öllinsen abwechselnd rechts und links der Scheibe leichter mitgenommen werden als bei senkrecht eintauchenden Scheiben.

Wie sich aus der Darstellung nach Fig. 5 ergibt, läßt sich durch die Ausbildung, bei welcher in einem Axialschnitt gesehen die benachbarten Scheiben 3 anwechselnd gegensinnig geneigt zur Rotationsachse 2 angeordnet sind, auch die Oberfläche ständig in den Bereichen zwischen benachbarten Scheiben 3 verändern. Eine entsprechende Verkürzung der Oberfläche ergibt hiebei einen dickerwerdenden Ölfilm, welcher leichter aufgenommen werden kann als der vergleichsweise dünnere Oberflächenfilm in Bereichen, bei welchen die Scheiben einen größeren Abstand zwischen benachbarten Scheiben definieren. Der Ölfilmspiegel ist wiederum mit 10 angedeutet und liegt bei der Darstellung nach Fig. 5 unterhalb der Rotationsachse 2.

Bei der Darstellung nach Fig. 6 und 7 wird der Einsatz derartiger Einrichtungen in stehenden Gewässern als Ölwehr bzw. Ölsperre schematisch erläutert. Die einzelnen halbschalenförmigen Becken 1 sind hiebei unter Verwendung von Kupplungsstücken 12 miteinander verbunden, wobei der Antriebsmotor lediglich an einem Ende vorgesehen ist und mit 13 bezeichnet ist. Die Abförderrinne für das abgetrennte Öl kann über die gesamte Länge der aneinandergereihten Vorrichtungen durchgehend ausgebildet sein und ist schematisch wiederum mit 5 angedeutet. Die einzelnen beckenförmigen Halbschalen 1 sind an ihrer Außenseite mit Schwimmern 14 verbunden und dies ermöglicht die Einbeziehung in eine Ölsperre, wie sie schematisch in Fig. 7 dargestellt ist.

Bei der Darstellung nach Fig. 7 sind mehrere Einrichtungen entsprechend Fig. 6 als Teil einer Ölsperre integriert. Die Ölsperre besteht hiebei aus mit Schwimmkörpern 15 ausgestatteten Gurten 16, wobei in diesen Gurt 16 die Einrichtung zum Abtrennen des Ölfilmes eingeschaltet ist. Mit zunehmender Abtrennung, wobei der Ölfilm in Richtung der Pfeile 17 abgefördert wird, kann der Gurt enger gezogen werden, womit ein mehr oder minder langes loses Gurtende 18 verbleibt, bis der Ölfilm soweit eingeengt ist, daß er restlos abgetrennt werden kann.

In Fig. 8 ist eine alternative Anordnung der erfindungsgemäßen Einrichtung für die Verwendung in fester Einbauform dargestellt. Die Scheiben 3 rotieren wiederum um eine Achse 2, wobei die Scheiben in einem an ein Absetzbecken 19 angebautes rinnenförmiges Becken 20 eintauchen. Die Abförderung des abgetrennten Öles erfolgt wiederum in eine Auffangrinne 5.

Bei der Darstellung nach Fig. 9 ist schematisch die Anordnung von Abstreifern 4 zu beiden Seiten einer Scheibe 3 angedeutet. Beide Abstreifer sind so ausgebildet, daß das von den Abstreifern 4 aufgenommene Material über die Oberfläche der Abstreifer zu Auffangrinnen 5 geleitet wird.

In Fig. 10 und 11 ist ein abgewandelte Art der Abführung des aufgenommenen Öles dargestellt, bei welcher anstelle einer seitlichen Auffangrinne 5 eine hohle Welle 21 zum Einsatz gelangt. An dieser hohlen Welle 21, welche mit einem Drehantrieb verbunden ist, sind die Scheiben 3 gelagert, wobei die Scheiben zur Vereinfachung der Abdichtungsprobleme über einen ersten radialen Teilbereich unter einem Winkel von 90° an die hohle Welle 21 angeschlossen sind. Auf diese Weise werden Flächen 22 ausgebildet, welche bei ihrer Rotation in der gleichen Querschnittsebene verbleiben und in einfacher Weise mit Dichtungen 23 zusammenwirken können. Die Dichtungen 23 sind an einem ortsfesten unverdrehbar gelagerten Gehäuse 24 vorgesehen. Das Gehäuse 24 ist zur Hohlwelle über Dichtungen 25 dichtend angeschlossen und trägt in nicht näher dargestellter Weise die Abstreifer für die Scheiben 3. Die Hohlwelle 21 weist radiale Durchbrechungen 26 auf, über welche das abgeschiedene Öl in das Innere 27 der Hohlwelle gelangen kann und über die Hohlwelle 21 abgeführt werden kann. Zu diesem Zweck weist das Gehäuse 24 an seiner Oberseite mit dem Gehäuse ortsfeste Öffnungen 28 auf, in welche die Abstreifer den abgestreiften Ölfilm fördern.

Bei der Darstellung nach Fig. 11 ist die Hohlwelle mit den an ihr befestigten Scheiben 3 unter Weglassen des Gehäuses 24 in der Draufsicht dargestellt. Als Dichtungen für die Dichtringe 23 und 25 können einfache O-Ringe eingesetzt werden. Die Öleinlaufbohrungen der Hohlwelle können über den Umfang der Hohlwelle 21 verteilt sein und es kann, wie in Fig. 10 dargestellt, im Gehäuse 24 ein Sammelraum für das abgestreifte Öl ausgebildet werden, so daß das Öl unter dem hydrostatischen Druck in diesen Sammelraum abgeführt wird. Der Ölspiegel innerhalb des Gehäuses 24 ist hiebei in Fig. 10 mit 29 bezeichnet.

**Patentansprüche**

1. Einrichtung zum Abtrennen von auf Flüssigkeiten aufschwimmenden Flüssigkeitsfilmen, insbesondere von auf Wasser aufschwimmenden Ölfilmen, mit von einer Rotationsachse (2) durchsetzten, zu rotierender Bewegung antreibbaren und in die Flüssigkeit teilweise eintauchenden Scheiben (3) und oberhalb der Flüssigkeitsoberfläche angeordneten Abstreifern (4), welche an wenigstens einer Fläche der Scheiben (3) anliegend geführt sind, dadurch gekennzeichnet, daß jede der Symmetrieachsen der Scheiben (3) mit der die Scheiben (3) durchsetzenden Rotationsachse (2) einen von 90° verschiedenen Winkel zur Rotationsachse (2) einschließt, und daß benachbarte Scheiben (3) in wenigstens einem Axialschnitt abwechselnd entgegengesetzt zur Rotationsachse (2) geneigt angeordnet sind.

2. Einrichtung nach Anspruch 1, dadurch gekennzeichnet, daß die Scheiben (3) über wenigstens ein Viertel, vorzugsweise die Hälfte, ihres Durchmessers in die flüssige Phase eintauchend gelagert sind.

3. Einrichtung nach Anspruch 1 oder 2, dadurch gekennzeichnet, daß im wesentlichen parallel zur Rotationsachse (2) eine Auffangrinne (5) angeordnet ist und daß die Abstreifer (4) zur Auffangrinne (5) geneigt angeordnet sind und sich bis oberhalb der Auffangrinne (5) erstrecken.

4. Einrichtung nach Anspruch 1, 2 oder 3, dadurch gekennzeichnet, daß die Auffangrinne als Hohlwelle (7, 21) ausgebildet ist, an welcher die Scheiben (3) gelagert sind.

5. Einrichtung nach einem der Ansprüche 1 bis 4, dadurch gekennzeichnet, daß die Hohlwelle (7, 21) nahe den Scheiben (3) radiale Durchbrechungen (6, 26) aufweist, daß ein feststehendes, zur Hohlwelle (21) und den Scheiben (3) abgedichtetes Gehäuse (24) die Durchbrechungen (26) der Hohlwelle (21) übergreift und daß die Abstreifer (4) an die aus der flüssigen Phase austauchenden Eintrittsöffnungen (28) des Gehäuses (24) münden.

6. Einrichtung nach einem der Ansprüche 1 bis 5, dadurch gekennzeichnet, daß die Abstreifer (4) an der Hohlwelle (21), vorzugsweise am feststehenden Gehäuse (24), gelagert sind.

7. Einrichtung nach einem der Ansprüche 1 bis 6, dadurch gekennzeichnet, daß die Abstreifer (4) den Flächen der Scheiben (3) zugewandte Abstreiflippen aufweisen und federnd an die Flächen der Scheiben (3) anpreßbar sind.

8. Einrichtung nach einem der Ansprüche 1 bis 7, dadurch gekennzeichnet, daß die Rotationsachse (2) bzw. Welle an ihren freien Enden Kupplungsstücke (12) für den Anschluß eines Antriebsmotors (13) und/oder weiterer Wellen trägt.

9. Einrichtung nach einem der Ansprüche 1 bis 8, dadurch gekennzeichnet, daß die Wellen in rinnenförmigen Halbschalen (1) gelagert sind.

## Claims

1. Apparatus for separating liquid films floating on liquids, in particular oil films floating on water, having discs (3) which have an axis of rotation (2) passing through them, can be driven into rotating movement and are partially immersed in the liquid, and having wipers (4), which are arranged above the liquid surface and are disposed adjacent to at least one face of the discs (3), characterized in that each of the axes of symmetry of the discs (3) includes with the axis of rotation (2) passing through the discs (3) an angle other than 90° to the axis of rotation (2), and in that neighbouring discs (3) are arranged alternately oppositely inclined to the axis of rotation (2) in at least one axial section.

2. Apparatus according to Claim 1, characterized in that the discs (3) are mounted immersed in the liquid phase over at least one quarter, preferably half, of their diameter.

3. Apparatus according to Claim 1 or 2, characterized in that a collecting channel (5) is arranged essentially parallel to the axis of rotation (2) and in that the wipers (4) are arranged inclined to the collecting channel (5) and extend over the collecting channel (5).

4. Apparatus according to Claim 1, 2 or 3, characterized in that the collecting channel is designed as a hollow shaft (7, 21), on which the discs (3) are mounted.

5. Apparatus according to one of Claims 1 to 4, characterized in that the hollow shaft (7, 21) has near to the discs (3) radial clearances (6, 26), in that a stationary housing (24), sealed-off with respect to the hollow shaft (21) and the discs (3), lies over the clearances (26) of the hollow shaft (21) and in that the wipers (4) open out onto the inlet openings (28) of the housing (24), which are emersed from the liquid phase.

6. Apparatus according to one of Claims 1 to 5, characterized in that the wipers (4) are mounted on the hollow shaft (21), preferably on the stationary housing (24).

7. Apparatus according to one of Claims 1 to 6, characterized in that the wipers (4) have wiping lips, facing the faces of the discs (3), and can be pressed resiliently against the faces of the discs (3).

8. Apparatus according to one of Claims 1 to 7, characterized in that the axis of rotation (2) or shaft bears at its free ends coupling pieces (12) for the connection of a drive motor (13) and/or further shafts.

9. Apparatus according to one of Claims 1 to 8, characterized in that the shafts are mounted in channel-shaped half-shells (1).

## Revendications

1. Installation pour la séparation de films de liquide surnageant sur des liquides, notamment de films d'huile surnageant sur de l'eau, comprenant des disques (3), traversés par un axe de rotation (2), pouvant être entraînés en un mouvement de rotation et plongeant partiellement dans le liquide, ainsi que des racleurs (4) agencés au-dessus du niveau du liquide et guidés en étant appliqués contre au moins une surface des disques (3), caractérisée en ce que chacun des axes de symétrie des disques (3) forme avec l'axe de rotation (2) traversant les disques (3) un angle différent de 90° par rapport à l'axe de rotation (2), et en ce que des disques voisins (3) sont agencés de manière à présenter, dans au moins une section axiale, des inclinaisons alternativement opposées par rapport à l'axe de rotation (2).

2. Installation selon la revendication 1, caractérisée en ce que les disques (3) sont montés de manière à plonger dans la phase liquide sur une étendue correspondant au moins au quart, mais de préférence à la moitié, de leur diamètre.

3. Installation selon la revendication 1 ou 2, caractérisée en ce qu'une goulotte de collecte (5) est agencée de manière sensiblement parallèle à l'axe de rotation (2), et en ce que les racleurs (4) sont agencés de manière inclinée en direction de la goulotte de collecte (5) en s'étendant jusqu'au-dessus de celle-ci.

4. Installation selon la revendication 1, 2 ou 3, caractérisée en ce que la goulotte de collecte est réalisée sous la forme d'un arbre creux (7, 21) sur lequel sont montés les disques (3).

5. Installation selon l'une des revendications 1 à 4, caractérisée en ce que l'arbre creux (7, 21) présente à proximité des disques (3), des ouvertures de passage radiales (6, 26), en ce qu'un carter fixe (24), rendu étanche par rapport à l'arbre creux (21) et aux disques (3), enferme les ouvertures de passage (26) de l'arbre creux (21), et en ce que les racleurs (4) débouchent dans les ouvertures d'entrée (28) du carter (24), qui sont situées en-dehors de la phase liquide.

6. Installation selon l'une des revendications 1 à 5, caractérisée en ce que les racleurs (4) sont montés sur l'arbre creux (21), de préférence sur le carter fixe (24).

7. Installation selon l'une des revendications 1 à 6, caractérisée en ce que les racleurs (4) présentent des lèvres de raclage dirigées vers les surfaces des disques (3), et peuvent être appliqués de manière élastique contre les surfaces des disques (3).

8. Installation selon l'une des revendications 1 à 7, caractérisé en ce que l'axe de rotation (2) ou l'arbre porte à ses extrémités libres des pièces d'accouplement (12) pour l'accouplement d'un moteur d'entraînement (13) et/ou d'autres arbres.

9. Installation selon l'une des revendications 1 à 8, caractérisée en ce que les arbres sont logés dans des cuvettes demi-circulaires (1) en forme de goulotte.

EP 0 203 057 B1

FIG. 1

FIG. 2

FIG. 3

FIG. 4

FIG. 5

FIG. 6

FIG. 7

FIG. 8

FIG. 9

FIG. 10

FIG. 11